Europäisches Patentamt

European Patent Office

Office européen des brevets

(19)

(11) Publication number: **0 270 367**
**A2**

(12) **EUROPEAN PATENT APPLICATION**

(21) Application number: **87310650.4**

(22) Date of filing: **03.12.87**

(51) Int. Cl.⁴: **F 16 K 7/10**

(30) Priority: **03.12.86 GB 8628937**

(43) Date of publication of application:
**08.06.88 Bulletin 88/23**

(84) Designated Contracting States:
**AT BE CH DE ES FR GB GR IT LI LU NL SE**

(71) Applicant: **Shorco Trench Systems Ltd.**
**Cross Green Way**
**Leeds LS9 0SE, West Yorkshire (GB)**

(72) Inventor: **Whitley, Peter**
**c/o Shorco Trench Systems Limited Cross Green Way**
**Leeds LS9 0SE West Yorkshire (GB)**

(74) Representative: **Orr, William McLean et al**
**URQUHART-DYKES & LORD 5th Floor, Tower House**
**Merrion Way**
**Leeds West Yorkshire, LS2 8PA (GB)**

(54) **Inflatable expandable device.**

(57) An inflatable device, primarily intended for sealing off a pipe or conduit, comprises a cylindrical wall which is a cured laminate of two rubber sheets 7,8. Enclosed within the laminate are parallel textile cords 9,10 arranged so that the cords of adjacent sheets 7,8 are aligned at an acute angle B with respect to each other. When the device is inflated, the arrangement of the cords 9,10 restrict any punctures to a small localised area, and also increases the maximum inflation pressure attainable.

FIG. 2

EP 0 270 367 A2

**Description**

## INFLATABLE EXPANDABLE DEVICE

This invention relates to an inflatable, expandable device, and particularly, though not exclusively, to a device of this type suitable for sealing-off a pipe or other conduit.

Currently available devices of this type are constructed in the form of a cuff, bag, cylinder or other shape from a laminate comprising two sheets of soft rubber or neoprene, in each of which there is embedded a number of parallel lengths of elongate reinforcement material, such as cords of textile material, laterally spaced apart at regular intervals. The rubber sheets are cured, thus bonding the sheets and cords together to form the laminate, which is then folded and seamed to form the desired shape of the device. The cords serve to strengthen and reinforce the laminate, and when the device is formed as a cylinder e.g. for use as a pipe stopper, the cords extend from one end to the other of the cylinder and generally parallel to the longitudinal axis of the cylinder in the uninflated state of the device. When the device is expanded by inflating it with compressed air, the longitudinal arrangement of the cords permits circumferential expansion of the sheet material, but has the disadvantage that should the laminate be punctured at a point, the device tends to split longitudinally along the space between a pair of adjacent cords, thereby causing irreparable damage, since the cords do not resist propagation of an incipient split.

Also, the pressures to which the known devices can safely be inflated are relatively low, typically 7 psi when the device is unconfined, and 21 psi when the device is confined within a pipe.

It is also known, in the manufacture of car tyres (and also hoses), to arrange laminated sheets (having textile or other reinforcing fibres), such that the reinforcing fibres in one sheet extend generally perpendicular to the fibres of an overlapping sheet (when assembled into the final shape of the tyre), so as to form a square mesh pattern. This pattern is generally maintained, both in the inflated and the uninflated state of the tyre. In this respect, it should be borne in mind that the rubber material from which a car tyre is made undergoes only minimal expansion (radially and circumferentially) during inflation of a car tyre.

By contrast, the invention is concerned with an inflatable device having a wall which extends at least partly around an axis of the device and which is capable of undergoing circumferential expansion as the wall moves radially outwardly of this axis during inflation of the device, and the invention seeks to provide a novel internal arrangement of reinforcement within the wall of the device which initially does not provide any appreciable resistance to circumferential expansion of the wall of the device upon initial inflation, but which is able to provide reinforcing strength against axial and circumferential stresses generated in the wall of the device upon expansion.

According to the invention there is provided an inflatable device having a wall which extends at least partly around an axis of the device and which is capable of undergoing circumferential expansion as the wall moves radially outwardly of said axis during inflation of the device, the wall being formed of a laminate of two or more sheets of expandable material, in which;

each sheet is provided with a plurality of elongate reinforcing elements which extend generally parallel to each other and at a small angle to said axis of the device in the uninflated state of the device;

the reinforcing elements of one sheet extend at a small angle relative to the reinforcing elements of an adjacent sheet, in the uninflated state of the device; and

the reinforcing elements of the sheets are arranged in such a way that they provide little or no appreciable resistance to circumferential expansion of the wall during initial inflation of the device, but during expansion of the device the elements of adjacent sheets undergo alteration in their relative orientations whereby the reinforcing elements provide resistance to tensile stresses in the wall acting in a direction generally parallel to the axis of the device and also to circumferential stress generated in the wall.

The preferred material from which the sheets are made include natural and synthetic rubbers, and other elastomeric materials of the type used in the manufacture of car tyres and pressure hoses.

The reinforcing elements provided in the sheets may take any suitable form to provide tensile strength, and may comprise textile or other fibres, and particular textile cords of the type used in car tyres.

The small angle of inclination of the elements of each sheet, relative to the axis of the device, is preferably about 5°, though this angle may vary in the range between 1° and 45°. When, as is preferred, the angle of inclination of the elements of each sheet is 5° to the axis of the device, the elements of adjacent sheets will define diamond-shaped mesh patterns having an opposed pair of angles of about 10° in the uninflated state of the device.

The reinforcing elements may be provided for each sheet in any suitable manner, such as by being embedded in the sheet material during formation thereof. When the sheet material is a rubber material, it will usually be cured, whereby the reinforcing material is securely bonded within each sheet, and the adjacent sheets are bonded to each other.

An inflatable device according to the invention may take any suitable form, according to the intended use. Thus, when the device is intended for use as a pipe stopper, for use in sewer repair or renovation, the device preferably is generally cylindrical in form in its uninflated state. The wall then extends circumferentially through 360° about the longitudinal axis of the device. For other uses, the device may be more "tyre-shaped", and/or have an arcuate shape, as seen in radial cross section.

Depending upon the intended use of the device, it may be formed with a single expandable wall, or it may be a double walled construction, in which one or both of the walls can move radially during expansion. When a double walled construction is provided, inflation may take place into the annular space defined between the two walls, which will apply radial inward pressure on the inner wall and radial outward pressure on the outer wall. This may force the inner wall radially inwardly, or hold it firmly in engagement on an inner supporting surface, whereas the outer wall will be moved radially outwardly until, in the case of use of the device as a pipe stopper, it comes into engagement with surrounding material of the pipe in which it is used.

In the case of a cylindrical device according to the invention, the reinforcing elements in the wall of the device may extend in spirals at about 5° to the longitudinal axis of the cylinder and at about 10° to each other, in the uninflated state of the device, but upon expansion to a predetermined limit, the relative orientation of the reinforcing elements may alter such that generally square or rectangular mesh patterns are provided, and this provides resistance against both axial and circumferential or hoop stresses generated in the cylindrical wall of the device. This provides considerable reinforcing strength to the device, upon expansion to a predetermined limit, but also has the considerable advantage of resisting the tendency for an incipient split to generate in the wall of the device following puncturing of the wall. When the device has been inflated to its fullest predetermined extent, any further inflation merely results in an increase of pressure within the device, when it is confined. In the event that a puncture should occur, the laminate will only tear as far as the next intersection between reinforcing elements of adjacent sheets.

A device according to the invention is particularly suited to sealing-off a pipe or conduit, but may also be adapted for other purposes, for example to lift vehicles or other heavy objects.

A device according to the invention may safely be inflated to pressures much higher than those indicated for known devices indicated above, and this provides a particular advantage when it is required to inflate the device outside a pipe or conduit.

Embodiments to the present invention will now be described, by way of example only, and contrasted with prior art, and with reference to the accompanying drawings in which:-

Figs 1a, 1b, 1c and 1d show various aspects of a conventional inflatable expandable device.

Fig 2 shows one arrangement of the cords in a device according to the present invention.

Fig 3 shows an alternative arrangement of the cords in a device according to the present invention.

Figs 4a, 4b and 4c show a device according to the present invention being inflated.

Figs 5a and 5b show an alternative device, also in accordance with the present invention.

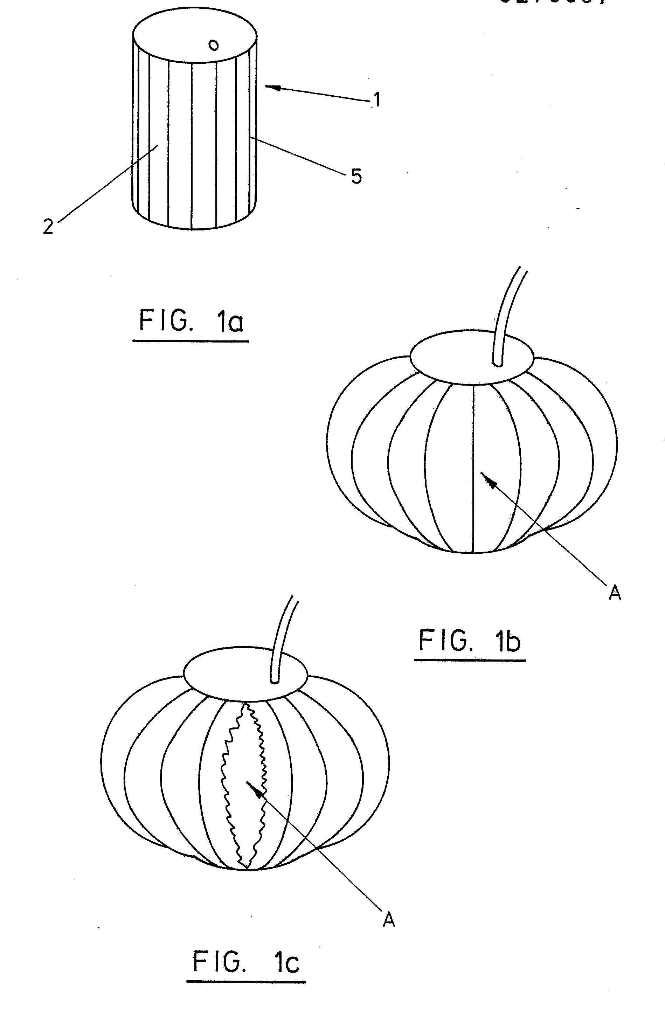

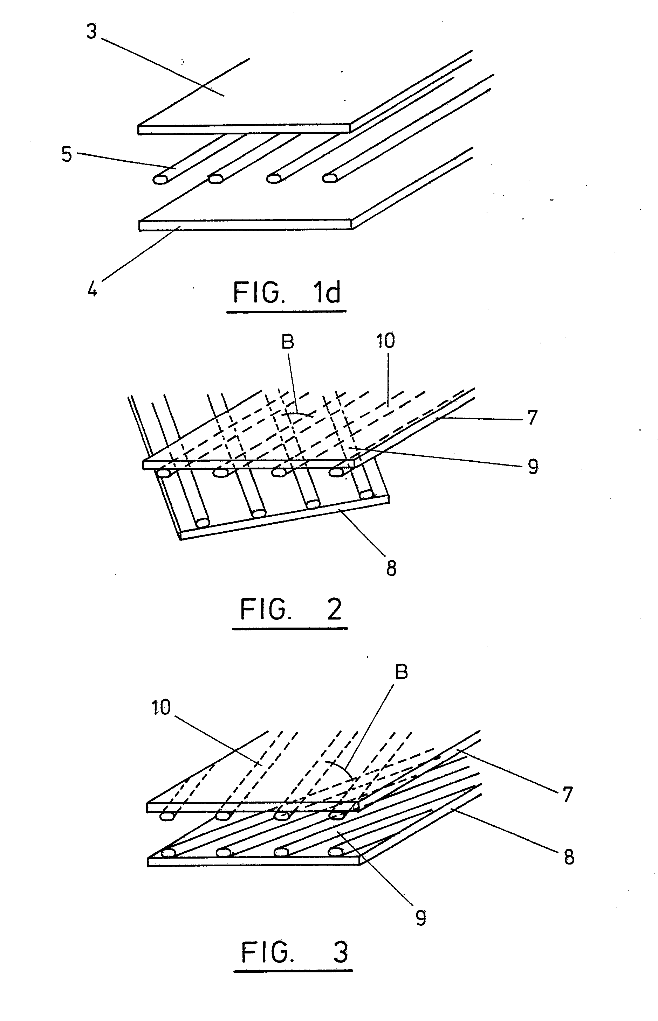

Referring to Figs 1a, 1b, 1c and 1d, a conventional inflatable expandable device for sealing off a pipe or off a conduit is in the form of a cylinder 1.

The walls 2 of the cylinder are formed from a cured laminate of two rubber (neoprene) sheets 3, 4 within which is enclosed parallel textile cords 5 which run from the top to the bottom of the cylinder. When the structure is inflated with compressed air, the laminate expands, and the distance between neighbouring cords increases, this being the greatest at the centre of the cylinder where the expansion is greatest. If a puncture occurs at point A, the cord arrangement results in the cylinder tearing completely from top to bottom, along the direction of the cords.

Such a structure may be safely inflated only to 7 psi unconfined, or up to 21 psi if confined within a pipe.

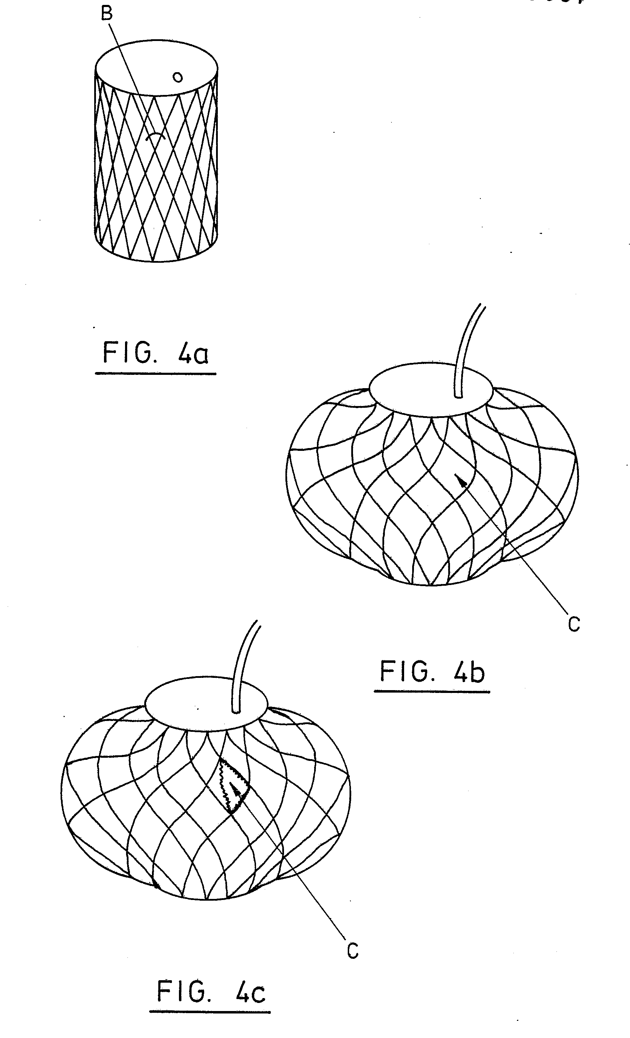

Referring now to Figs 2, 3, 4a, 4b and 4c, the device of the present invention is formed from a laminate of two sheets of rubber 7, 8. Each sheet has bonded to it a number of parallel textile cords 9, 10 respectively, which cords may be either natural or synthetic.

The cords and/or the sheets are arranged so that the cords 9, 10 of adjacent sheets 7,8 are aligned at an acute angle B with respect to each other. This may be achieved either by laying the cords onto each sheet at an angle of B/2 to one edge of the sheet, as shown in Fig 3, or alternatively by laying the cords on each sheet parallel to one edge, and then rotating sheet 7 through B° before laying it on a sheet 8.

The angle B is preferably 10°, but it should be appreciated that a smaller or larger angle may be used.

The laminate is then cured to bond the two sheets together, and the cured laminate is then used to construct any desired form of expandable, inflatable device, for example a cylindrical device as shown in Figs 4a, 4b and 4c, which is similar in outward appearance to the device shown in Figs 1a, 1b and 1c.

The main advantage of the device of the present invention is that when the device is inflated as shown in Figs 4b and 4c, any puncture such as that shown at C results only in a small localised damaged area of the laminate, instead of the splitting effect which occurs with conventional device of this type.

Also, as the device expands, the diamond shaped mesh pattern changes, particularly in the region where the greatest expansion occurs, i.e. in the central region, until such time as the cords of adjacent sheets intersect almost at right angles. This is when the device has achieved its maximum expansion, any further inflation only serving to increase the pressure inside the device whilst its size remains constant.

The device according to the present invention may safely be inflated to at least 60 psi.

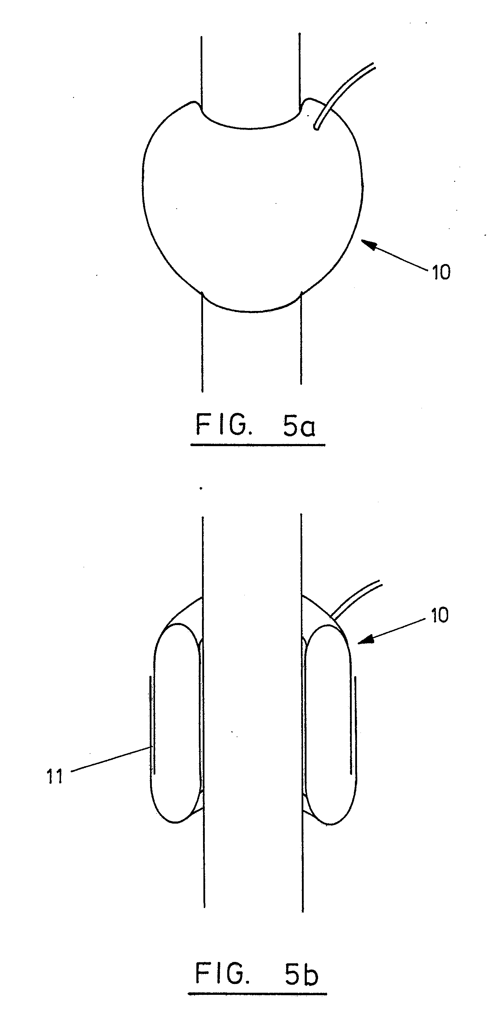

An alternative embodiment to the device according to the present invention is shown in Figs 5a and 5b. This is in the shape of a cuff 10 which consists of a wide strip of the laminate of the present invention, having its edges folded back one upon the other to form an overlapped seam 11. The cuff 10 can be inflated with compressed air so that it seems the shape shown in Fig 5a.

It should be appreciated that the device according to the present invention may take any shape or form, and may also be constructed in a wide range of sizes, in order to suit the particular application.

Having regard to the above description (the preferred embodiments), it will be appreciated that these are merely examples of an inflatable device having a wall which extends at least partly around an axis of the device and which is capable of undergoing circumferential expansion as the wall moves radially outwardly of said axis during inflation of the device, the wall being formed of a laminate of two or more sheets of expandable material, in which: reinforcing elements which extend generally parallel to each other and at a small angle to said axis of the device in the uninflated state of the device;

the reinforcing elements of one sheet extend at a small angle relative to the reinforcing elements of an adjacent sheet, in the uninflated state of the device; and

the reinforcing elements of the sheets are arranged in such a way that they provide little or no appreciable resistance to circumferential expansion of the wall during initial inflation of the device, but during expansion of the device the elements of adjacent sheets undergo alteration in their relative orientations whereby the reinforcing elements provide resistance to tensile stresses in the wall acting in a direction generally parallel to the axis of the device and also to circumferential stress generated in the wall.

## Claims

1. An inflatable device having a wall which extends at least partly around an axis of the device and which is capable of undergoing circumferential expansion as the wall moves radially outwardly of said axis during inflation of the device, the wall being formed of a laminate of two or more sheets (7,8) of expandable material, characterised in that each sheet is provided with a plurality of elongate reinforcing elements (9,10) which extend generally parallel to each other and at a small angle to said axis of the device in the uninflated state of the device, the reinforcing elements of one sheet extend at a small angle (B) relative to the reinforcing elements of an adjacent sheet, in the uninflated state of the device, and the reinforcing elements of the sheets are arranged in such a way that they provide little or no appreciable resistance to circumferential expansion of the wall during initial iflation of the device, but during expansion of the device the elements of adjacent sheets undergo alteration in their relative orientations whereby the reinforcing elements provide resistance to tensile stresses in the wall acting in a direction generally parallel to the axis of the device and also to circumferential stress generated in the wall.

2. An inflatable device according to Claim 1 further characterised in that the sheets (7,8) are made from elastomeric material.

3. An inflatable device according to Claim 1 or Claim 2 further characterised in that the reinforcing elements (9,10) comprise textile or other fibres.

4. An inflatable device according to any of the preceding Claims, further characterised in that the small angle of inclination of the reinforcing elements of each sheet, relative to the axis of the device, is in the range 1° to 45°

5. An inflatable device according to Claim 4 further characterised in that the small angle of inclination of the reinforcing elements of each sheet, relative to the axis of the device, is about 5°, and the small angle of inclination (B) of the reinforcing elements of one sheet, relative to the reinforcing elements of an adjacent sheet, is about 10° when the device is in its uninflated state.

6. An inflatable device according to any of the preceding Claims further characterised in that there is provided a double walled construction in which one or both of the walls can move radially during inflation of the device.

7. An inflatable device according to any of the preceding Claims further characterised in that the reinforcing elements (9,10) are embedded in the sheet material during formation thereof.

8. An inflatable device according to any of the preceding Claims further characterised in that the wall extends circumferentially through 360° about the longitudinal axis of the device.

0270367

FIG. 1a

FIG. 1b

FIG. 1c

FIG. 1d

FIG. 2

FIG. 3

FIG. 4a

FIG. 4b

FIG. 4c

FIG. 5a

FIG. 5b